# FASCICULE DE BREVET EUROPEEN

(11) **EP 1 068 438 B1**
(45) Date de publication et mention de la délivrance du brevet: **08.12.2004**
(21) Numéro de dépôt: 00901662.7
(22) Date de dépôt: 28.01.2000
(51) Int. Cl.: F02K 1/00, F02K 1/12

(54) **SYSTEME D'ACTIVATION DE TUYERE ORIENTABLE PAR ANNEAU ELASTIQUE POUR PROPULSEUR A REACTION**
BETÄTIGUNGSSYSTEM MIT EINEM ELASTISCHEN VERSTELLRING FÜR EINE SCHWENKBARE SCHUBDÜSE
SYSTEM FOR ACTIVATING AN ADJUSTABLE TUBE BY MEANS OF AN ELASTIC RING FOR A THRUST NOZZLE

(30) Priorité: 29.01.1999 FR 9901022
(43) Date de publication de la demande: 17.01.2001
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: ABBE, François, F-33127 Martignas (FR); CAMY, Pierre, F-33160 Saint Médard en Jalles (FR); HABAROU, Georges, F-33110 Le Bouscat (FR); THUAL, Michel, F-33290 Blanquefort (FR)
(74) Mandataire: Joly, Jean-Jacques
(86) Numéro de dépôt international: PCT/FR2000/000195
(87) Numéro de publication internationale: WO 2000/045040

(56) Documents cités:
- FR-A- 2 470 253
- US-A- 3 696 999
- US-A- 3 726 480

## Description

### Domaine de l'invention

La présente invention concerne une tuyère orientable pour propulseur à réaction, c'est-à-dire une tuyère qui est capable d'orienter le jet d'un propulseur à réaction. Plus particulièrement, la présente invention concerne une tuyère comportant une partie fixe sur laquelle sont articulés des volets orientables. Cette tuyère, lorsqu'elle est montée sur un avion, permet au pilote de modifier rapidement le pilotage en tangage et lacet de l'avion (voire le roulis pour un bimoteur).

### Arrière-plan de l'invention

Des tuyères de ce type sont connues dans la technique. Certaines d'entre elles utilisent un anneau d'activation disposé à une extrémité aval de la partie fixe et relié aux volets. L'anneau d'activation est déplacé au moyen de vérins, ce qui entraîne l'orientation des volets. Ces tuyères nécessitent des équipements compliqués, en particulier des cardans, pour transmettre les déplacements de l'anneau d'activation vers les volets.

Il a été proposé dans le document FR 2 470 253 de réaliser un moyen d'orientation d'une partie pivotante de tuyère qui comporte une structure annulaire élastique sectorisée reliée, d'une part, à la partie fixe de la tuyère et, d'autre part, à la partie pivotante, et des vérins de commande permettant de déplacer la partie pivotante avec déformation de la structure annulaire élastique. Celle-ci comprend un premier anneau lamifié ayant une armature rigide interne solidaire de la partie fixe de la tuyère et un deuxième anneau lamifié ayant une armature rigide interne solidaire de la partie pivotante. Les armatures rigides externes des deux anneaux sont reliées l'une à l'autre. Les vérins agissent sur la partie pivotante qui, se déplaçant, provoque une déformation des anneaux élastiques avec rapprochement ou écartement mutuels de leurs armatures rigides internes.

### Objet et résumé de l'invention

La présente invention vise à fournir une tuyère à volets orientables qui ait une structure plus simple et moins coûteuse.

A cette fin, il est prévu une tuyère orientable pour propulseur à réaction, comprenant une partie fixe destinée à être rattachée au propulseur, une partie mobile montée sur une extrémité de la partie fixe, et un moyen d'orientation de la partie mobile qui comprend une structure annulaire élastique ayant une circonférence fixe solidaire de l'extrémité de la partie fixe et une circonférence mobile reliée à la partie mobile, et des premiers vérins de commande permettant de déplacer la partie mobile avec déformation de la structure annulaire élastique, tuyère dans laquelle, conformément à l'invention,
la partie mobile de la tuyère est formée d'une pluralité de volets orientables, et
la structure annulaire élastique est formée par un anneau élastique ayant une circonférence interne fixe formée par une première bague annulaire rigide solidaire de la partie fixe et une circonférence externe mobile formée par une deuxième bague annulaire rigide à laquelle sont rattachés des extrémités libres des premiers vérins de commande ainsi que des panneaux ou bielles sur lesquels les volets sont articulés.

La structure formée par l'anneau élastique et les deux bagues annulaires rigides est monobloc, si bien que les jeux fonctionnels et le nombre de pièces en mouvement sont minimisés.

Les vérins de commande commandent directement le déplacement de la seconde circonférence de l'anneau élastique, lequel déplacement entraîne l'orientation des volets.

L'anneau élastique permet d'une part d'activer les volets, sous l'action du moyen de commande, et d'autre part de reprendre les efforts de contre-poussée. En outre, grâce à la structure annulaire du système d'activation constitué par l'anneau élastique, la position d'équilibre de la tuyère correspond à la position de repos de l'anneau, ce qui apporte une sécurité supplémentaire en cas de panne du moyen de commande.

L'anneau élastique peut être continu ou sectorisé.

De préférence, l'anneau élastique est conçu en un matériau lamifié, constitué d'un empilement de couches alternativement en élastomère et en métal, d'un empilement de couches alternativement en élastomère et en un matériau composite organique, ou d'un empilement de couches alternativement en élastomère et en un matériau thermo-structural. L'élastomère est choisi parmi les élastomères capables de supporter des températures supérieures à 150°C. On utilise par exemple un élastomère choisi parmi les matériaux fluoro-carbonés et fluoro-silicones, et les élastomères hydrogénés tels que HNBR ("Hydrogenated Nitrile Butadiene Rubber").

Selon un mode de réalisation de l'invention, les volets sont articulés, en des premiers endroits respectifs, auxdits panneaux ou bielles, et en des seconds endroits respectifs, à la partie fixe de la tuyère.

Selon un autre mode de réalisation de la présente invention :
les volets précités sont des volets divergents commandés,
la tuyère comporte en outre des volets convergents commandés,
chaque volet divergent commandé est articulé, en un premier endroit, à un panneau ou une bielle, et en un second endroit, à un volet convergent commandé, et
les volets convergents commandés sont en outre articulés à la partie fixe.

Un moyen est alors prévu pour orienter les volets convergents commandés. Ce moyen, qui permet de modifier le diamètre du col de la tuyère, c'est-à-dire le diamètre de la section transversale délimitée par les points d'articulation entre les volets convergents et divergents, peut comprendre des seconds vérins, disposés sur la circonférence de la partie fixe, un anneau sensiblement perpendiculaire à l'axe longitudinal de la tuyère et auquel sont reliées les extrémités libres des seconds vérins, et des galets montés dans ledit anneau et qui suivent chacun une surface de came sur un volet convergent commandé.

Avantageusement, la tuyère selon ce mode de réalisation comprend en outre un moyen d'anti-rotation pour limiter les mouvements de rotation dudit anneau autour de l'axe longitudinal de la tuyère. Le moyen d'anti-rotation comprend lesdits seconds vérins, équipés de biellettes latérales articulées chacune, en une première extrémité, au corps du vérin correspondant, et, en une seconde extrémité, sur la partie fixe.

La tuyère selon l'invention peut en outre comprendre des volets divergents suiveurs et des volets convergents suiveurs intercalés, respectivement, entre les volets divergents commandés et les volets convergents commandés.

### Brève description des dessins

D'autres caractéristiques et avantages de la présente invention apparaîtront à la lecture de la description détaillée suivante de plusieurs modes de réalisation, faite en référence aux dessins annexés, dans lesquels :
- la figure 1 est une coupe schématique d'une tuyère selon la présente invention, en position neutre ;
- la figure 2 montre en perspective un anneau élastique et des bagues annulaires de support associées, utilisés dans la tuyère selon l'invention ;
- les figures 3 et 4 montrent respectivement la tuyère selon l'invention orientée vers le haut et vers le bas ;
- la figure 5 montre en vue de dessus un dispositif d'anti-rotation utilisé dans la tuyère selon l'invention ; et
- la figure 6 montre en perspective un anneau élastique et des bagues annulaires de support associées selon une autre réalisation de la présente invention.

### Description détaillée de modes préférés de réalisation

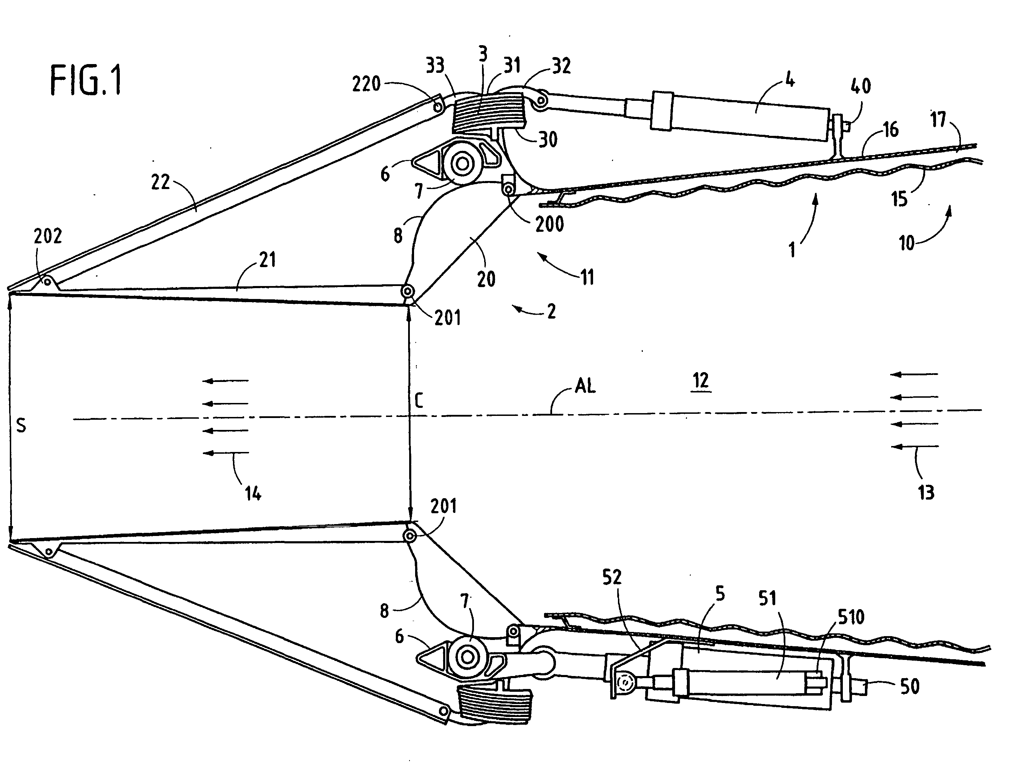

La figure 1 montre schématiquement une tuyère orientable conforme à la présente invention. La tuyère comprend une partie fixe 1 qui est solidaire, en une extrémité amont 10, d'un propulseur à réaction (non représenté), et un ensemble annulaire de volets orientables 2, articulé sur une extrémité aval 11 de la partie fixe 1.

La partie fixe 1 comprend un canal d'éjection 12 qui reçoit les gaz produits par le propulseur et les éjecte, comme indiqué par les flèches 13 et 14 sur la figure 1. Le canal d'éjection 12 est délimité par une chemise ondulée sensiblement cylindrique 15. Une paroi externe 16 définit avec cette dernière un espace de refroidissement 17 dans lequel circule un fluide de refroidissement approprié.

L'ensemble annulaire de volets 2 comprend, de manière connue, des volets commandés, c'est-à-dire des volets dont les déplacements sont directement commandés par des moyens d'actionnement, et des volets suiveurs, intercalés entre les volets commandés et adaptés pour simplement suivre les déplacements des volets commandés.

Plus particulièrement, l'ensemble annulaire de volets 2 est constitué d'une pluralité de structures commandées et suiveuses adjacentes, montées circulairement sur la circonférence de l'extrémité aval 11 de la partie fixe 1. Chaque structure comporte notamment un volet convergent 20 et un volet divergent 21. Les structures commandées comportent en outre chacune un panneau, ou une bielle, d'activation 22, dont le rôle sera expliqué plus loin. Dans la suite de la description, il ne sera fait référence qu'aux structures commandées.

Conformément, à la présente invention, les volets divergents 21 sont orientés par l'intermédiaire d'un anneau d'activation élastique 3 inséré entre deux bagues annulaires rigides 30 et 31. L'anneau élastique 3 est typiquement conçu en un matériau lamifié, c'est-à-dire en un matériau constitué par un empilement de couches d'élastomère intercalées entre des armatures. Selon l'invention, L'élastomère est choisi parmi les élastomères capables de supporter des températures supérieures à 150°C. On utilise par exemple un élastomère choisi parmi les matériaux fluoro-carbonés et fluoro-silicones, et les élastomères hydrogénés tels que HNBR ("Hydrogenated Nitrile Butadiene Rubber"). Les armatures sont de préférence conçues en métal, en un matériau composite organique ou en un matériau thermo-structural tel qu'un matériau composite carbone-carbone ou un matériau composite à matrice céramique. La bague annulaire 30, sur laquelle est fixée la circonférence interne de l'anneau élastique 3, est solidaire de la partie fixe 1, et sert de support fixe. La bague annulaire 31, sur laquelle est fixée la circonférence externe de l'anneau élastique 3, sert de support mobile à l'anneau élastique.

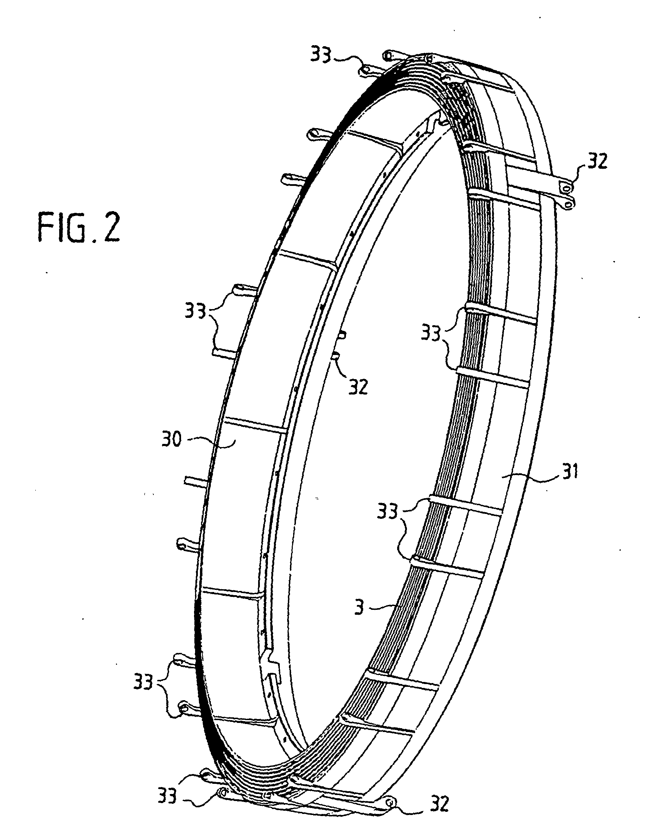

La figure 2 montre en perspective l'anneau élastique 3 et les bagues de support associées 30 et 31. Comme illustré aux figures 1 et 2, la bague mobile 31 comporte des premières pattes de fixation 32 s'étendant vers l'amont de la tuyère, et des secondes pattes de fixation 33 s'étendant vers l'aval de la tuyère. Les premières pattes de fixation 32 permettent de relier la bague mobile 31 à des vérins 4 montés sur la circonférence de la partie fixe 1 de la tuyère (un seul vérin 4 est représenté à la figure 1). Plus particulièrement, les extrémités des tiges des vérins 4 sont rattachées aux premières pattes de fixation 32, tandis que les extrémités amont 40 des vérins 4 sont articulées sur la paroi externe 16. Les secondes pattes de fixation 33 permettent de fixer des extrémités respectives 220 des panneaux d'activation 22 à la bague mobile 31.

Dans une structure de volets commandée donnée, le volet convergent 20 est articulé sur la partie fixe 1 en un point (ou une ligne) d'articulation 200. Le volet divergent 21 est articulé sur une extrémité aval du volet convergent 20, en un point d'articulation 201, et sur le panneau d'activation 22 en un point d'articulation 202, opposé à l'extrémité 220 précitée. La section circulaire délimitée, à l'intérieur de la tuyère, par l'ensemble des points d'articulation 201, et désignée à la figure 1 par le repère C, constitue le col de la tuyère. Les extrémités aval des volets divergents 21 définissent la section de sortie du divergent de tuyère, désignée par le repère S.

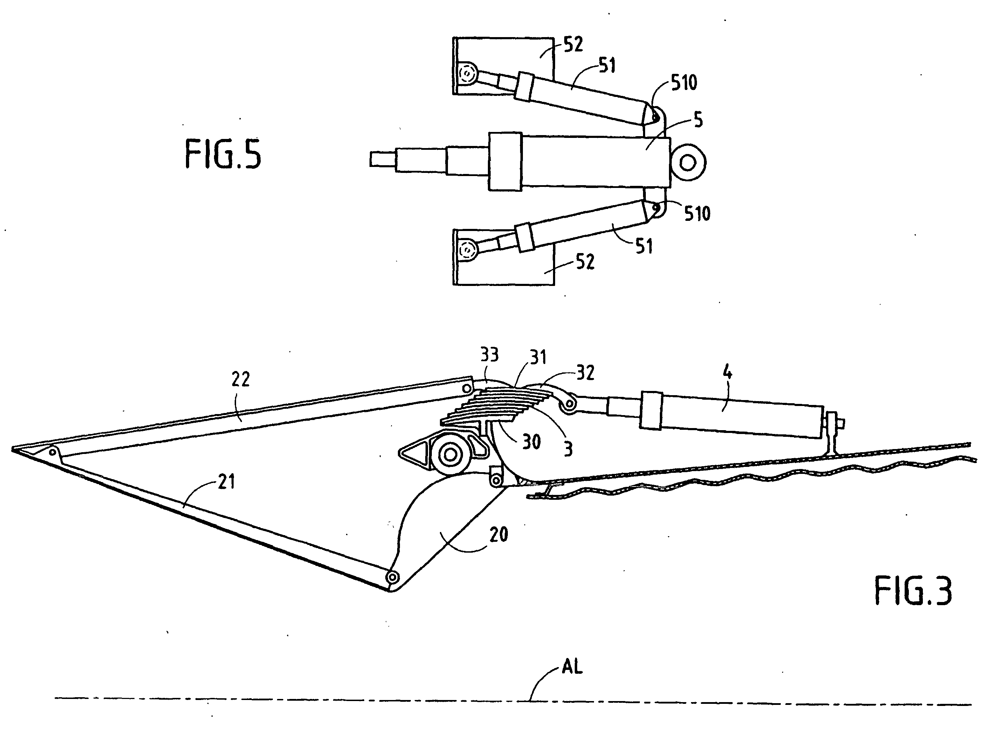

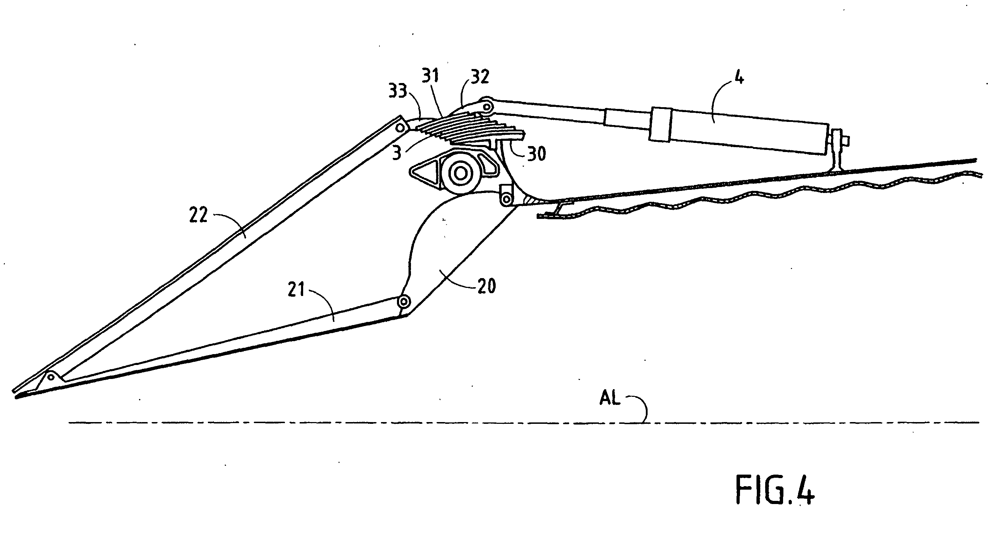

Selon la présente invention, le déplacement de la bague mobile 31, sous l'action des vérins 4, modifie l'orientation des volets divergents 21. Ces derniers pivotent autour des points d'articulation 201, les volets convergents 20 restant fixes, dans la mesure où le diamètre du col n'est pas simultanément modifié. Les figures 3 et 4 illustrent des configurations extrêmes dans lesquelles un volet divergent 21 est orienté respectivement dans un sens et dans le sens opposé. Dans la première configuration (figure 3), le vérin 4 représenté tire la bague mobile 31 vers l'amont de la tuyère et provoque une torsion correspondante de l'anneau élastique 3, de sorte que le volet 21 s'oriente dans une direction. Dans la seconde configuration (figure 4), le vérin 4 représenté pousse la bague mobile 31 vers l'aval de la tuyère, de sorte que le volet 21 s'oriente dans la direction opposée. Les différents vérins 4 sont de préférence régulièrement répartis sur la circonférence de la paroi externe 16. En pratique, au moins trois vérins disposés selon des angles de 120° sont utilisés. En outre, les fonctionnements respectifs des vérins 4 sont synchronisés d'une manière qui permette d'obtenir l'orientation souhaitée du jet. Ainsi, par exemple, dans la configuration illustrée à la figure 3, les deux vérins (non représentés) disposés à 120° par rapport au vérin 4 représenté, poussent la bague mobile 31 tandis que le vérin 4 représenté tire cette dernière.

Outre l'orientation des volets divergents 21, il est possible, selon la présente invention, de modifier le diamètre du col C. A cet effet, il est prévu des moyens d'orientation des volets convergents 20, permettant de faire pivoter les volets convergents 20 autour des points d'articulation 200. Le pivotement des volets convergents 20 autour des points 200 entraîne un déplacement des volets divergents 21. Les volets 20, 21 et les moyens d'orientation des volets convergents sont agencés de telle sorte que le déplacement combiné des volets convergents 20 et des volets divergents 21 satisfasse une loi de cinématique prédéterminée, liant le diamètre du col C et le diamètre de la section de sortie S de la tuyère.

Les moyens d'orientation des volets convergents, connus en soi, comprennent typiquement des vérins 5, dont un est représenté à la figure 1, qui sont fixés en une extrémité amont 50 à la partie fixe 1 et reliés par l'extrémité libre de leur tige à un anneau 6. En position neutre de la tuyère, l'anneau 6 a comme axe de symétrie l'axe longitudinal de la tuyère, désigné à la figure 1 par AL. Dans l'anneau 6 sont disposés des galets 7 qui suivent chacun une surface de came 8 sur un volet convergent 20. En pratique, un galet 7 est prévu par volet convergent commandé. Le déplacement des galets 7 sur les surfaces de came 8 fait pivoter les volets convergents 20 autour des points 200 d'articulation avec la partie fixe 1, ce qui modifie le diamètre du col C. En pratique, de préférence, au moins trois vérins 5 de commande des volets convergents sont disposés régulièrement sur la circonférence de la paroi externe 16 de la partie fixe 1 et intercalés entre les vérins 4.

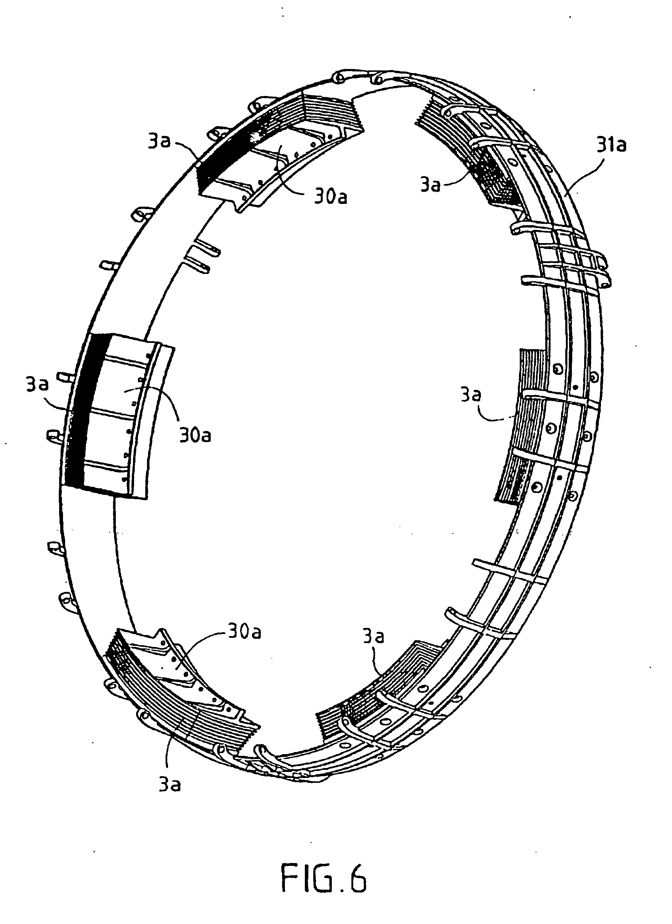

En outre, comme montré aux figures 1 et 5, chaque vérin 5 de commande des volets convergents comporte des biellettes latérales 51, montées de part et d'autre du corps du vérin 5. Les biellettes 51 sont articulées, en une extrémité amont 510, sur le corps du vérin 5 et articulées, en une extrémité aval, sur une patte de montage 52 solidaire de la partie fixe 1 de la tuyère. Les biellettes latérales 51 forment, avec les vérins 5, un dispositif d'anti-rotation qui limite les mouvements de rotation de l'anneau 6 dans une direction circonférentielle de la tuyère, orthogonale à l'axe longitudinal AL de la tuyère.

L'anneau élastique 3 tel qu'il est illustré à la figure 2 est continu. En variante, l'anneau élastique 3 peut être sectorisé. La figure 6 montre un tel anneau élastique sectorisé, constitué d'un ensemble de plots élastiques 3a montés sur une bague annulaire de support mobile 31 a et comportant chacun une bague annulaire de support fixe 30a solidaire de la partie fixe 1 de la tuyère.

Par ailleurs, la tuyère telle qu'illustrée aux figures 1, 3 et 4 comprend un ensemble convergent-divergent formé par les volets convergents 20 et les volets divergents 21. En variante, seulement une des parties convergente et divergente peut être formée de volets articulés. Dans l'exemple où seul les volets divergents 21 sont conservés, chaque volet divergent est articulé, en une extrémité 202, à un panneau ou une biellette 22 rattaché à la bague de support mobile 31, et est également articulé, en une extrémité 201 (qui est alors confondue avec le point 200 sur la figure 1), directement sur la partie fixe 1.

## Revendications

1. Tuyère orientable pour propulseur à réaction comprenant une partie fixe (1) destinée à être rattachée au propulseur, une partie mobile (21) montée sur une extrémité (11) de la partie fixe, et un moyen (3, 4, 22, 31) d'orientation de la partie mobile qui comprend une structure annulaire élastique (3) ayant une circonférence fixe solidaire de l'extrémité (11) de la partie fixe et une circonférence mobile reliée à la partie mobile, et des premiers vérins de commande (4) permettant de déplacer la partie mobile avec déformation de la structure annulaire élastique,
dans laquelle la partie mobile de la tuyère est formée d'une pluralité de volets orientables (21), et la structure annulaire élastique est formée par un anneau élastique (3) ayant une circonférence interne fixe formée par une première bague annulaire rigide (30) solidaire de la partie fixe (1) et une circonférence externe mobile formée par une deuxième bague annulaire rigide (31) à laquelle sont rattachés des extrémités libres des premiers vérins de commande (4) ainsi que des panneaux ou bielles (22) sur lesquels les volets (21) sont articulés.

2. Tuyère orientable selon la revendication 1, **caractérisée en ce que** les volets (21) sont articulés, en des premiers endroits respectifs (202), auxdits panneaux ou bielles (22), et en des seconds endroits respectifs (201, 200), à la partie fixe (1).

3. Tuyère orientable selon l'une quelconque des revendications 1 et 2, **caractérisée en ce que** lesdits volets sont des volets divergents commandés (21).

4. Tuyère orientable selon la revendication 3, **caractérisée en ce que**
la tuyère comporte en outre des volets convergents commandés (20),
chaque volet divergent commandé (21) est articulé, en un premier endroit (202), à un panneau ou une bielle (22), et en un second endroit (201), à un volet convergent commandé (20), et
les volets convergents commandés (20) sont en outre articulés à la partie fixe (1).

5. Tuyère orientable selon la revendication 4, **caractérisée en ce qu'**elle comprend en outre un moyen (5, 6, 7, 8) pour orienter les volets convergents commandés.

6. Tuyère orientable selon la revendication 5, **caractérisée en ce que** ledit moyen pour orienter les volets convergents commandés comprend des seconds vérins (5), disposés sur la circonférence (16) de la partie fixe (1), un anneau (6) sensiblement perpendiculaire à un axe longitudinal (AL) de la tuyère et auquel sont reliées les extrémités libres des seconds vérins, et des galets (7) montés dans ledit anneau (6) et qui suivent chacun une surface de came (8) sur un volet convergent commandé (20).

7. Tuyère orientable selon la revendication 6, **caractérisée en ce qu'**elle comprend en outre un moyen d'anti-rotation (5, 51, 52) pour limiter les mouvements de rotation dudit anneau (6) autour de l'axe longitudinal (AL) de la tuyère.

8. Tuyère orientable selon la revendication 7, **caractérisée en ce que** le moyen d'anti-rotation comprend lesdits seconds vérins (5), qui sont équipés de biellettes latérales (51) articulées chacune, en une première extrémité (510), au corps du vérin correspondant, et, en une seconde extrémité, sur la partie fixe (1).

9. Tuyère orientable selon l'une quelconque des revendications 4 à 8, **caractérisée en ce qu'**elle comprend en outre des volets divergents suiveurs et des volets convergents suiveurs intercalés, respectivement, entre les volets divergents commandés et les volets convergents commandés.

10. Tuyère orientable selon l'une quelconque des revendications 1 à 9, **caractérisée en ce que** l'anneau élastique est conçu en un matériau lamifié constitué d'un empilement de couches alternativement en élastomère et en un matériau choisi parmi un métal, un matériau composite organique, et un matériau thermo-structural.

## Patentansprüche

1. Verstellbare Düse für ein Düsentriebwerk, umfassend
einen feststehenden Abschnitt (1), der dazu bestimmt ist, am Triebwerk angebracht zu werden,
einen beweglichen Abschnitt (21), der auf einem Ende (11) des feststehenden Abschnitts befestigt ist, und
ein Mittel (3, 4, 22, 31) zur Verstellung des beweglichen Abschnitts, das eine elastische ringförmige Struktur (3), welche einen feststehenden Umfang, der mit dem Ende (11) des feststehenden Teils fest verbunden ist, und einen beweglichen Umfang, der mit dem beweglichen Abschnitt verbunden ist, und erste Steuerzylinder (4) aufweist, welche es erlauben, den beweglichen Abschnitt mit Verformung der elastischen ringförmigen Struktur zu verschieben,
wobei der bewegliche Abschnitt der Düse aus einer Vielzahl von verstellbaren Klappen (21) und die ringförmige elastische Struktur aus einem elastischen Ring (3) gebildet ist, welcher einen feststehenden Innenumfang, der durch einen ersten steifen ringförmigen Ring (30) gebildet ist, der mit dem feststehenden Abschnitt (1) fest verbunden ist, und einen beweglichen Außenumfang aufweist, der aus einem zweiten steifen ringförmigen Ring (31) gebildet ist, an welchem freie Enden der ersten Steuerzylinder (4) sowie Platten oder Stangen (22) angebracht sind, auf denen die Klappen (21) gelenkig angebracht sind.

2. Verstellbare Düse nach Anspruch 1, **dadurch gekennzeichnet, daß** die Klappen (21) jeweils an ersten Stellen (202) an den Platten oder Stangen (22) und jeweils an zweiten Stellen (201, 200) an dem feststehenden Abschnitt (1) angelenkt sind.

3. Verstellbare Düse nach einem der Ansprüche 1 und 2, **dadurch gekennzeichnet, daß** die Klappen gesteuerte divergierende Klappen (21) sind.

4. Verstellbare Düse nach Anspruch 3, **dadurch gekennzeichnet,**
**daß** die Düse ferner gesteuerte konvergierende Klappen (20) umfaßt,
**daß** jede gesteuerte divergierende Klappe (21) an einer ersten Stelle (202) an einer Platte oder einer Stange (22) und an einer zweiten Stelle (201) an einer gesteuerten konvergierenden Klappe (20) angelenkt ist, und
**daß** die gesteuerten konvergierenden Klappen (20) ferner an dem feststehenden Abschnitt (1) angelenkt sind.

5. Verstellbare Düse nach Anspruch 4, **dadurch gekennzeichnet, daß** sie femer ein Mittel (5, 6, 7, 8) umfaßt, um die gesteuerten konvergierenden Klappen zu verstellen.

6. Verstellbare Düse nach Anspruch 5, **dadurch gekennzeichnet, daß** das Mittel zum Verstellen der gesteuerten konvergierenden Klappen zweite Zylinder (5), die auf dem Umfang (16) des feststehenden Abschnitts (1) angeordnet sind, einen Ring (6), der im wesentlichen senkrecht zu einer Längsachse (AL) der Düse ist und mit dem die freien Enden der zweiten Zylinder verbunden sind, und Rollen (7) umfaßt, die im Ring (6) befestigt sind und von denen jede einer Nockenoberfläche (8) auf einer gesteuerten konvergierenden Klappe (20) folgt.

7. Verstellbare Düse nach Anspruch 6, **dadurch gekennzeichnet, daß** sie ferner ein Anti-Drehmittel (5, 51, 52) umfaßt, um die Drehbewegungen des Rings (6) um die Längsachse (AL) der Düse herum zu begrenzen.

8. Verstellbare nach Anspruch 7, **dadurch gekennzeichnet, daß** das Anti-Drehmittel die zweiten Zylinder (5) umfaßt, die mit seitlichen Stangen (51) versehen sind, die jeweils an einem ersten Ende (510) am Körper des entsprechenden Zylinders und an einem zweiten Ende auf dem feststehenden Abschnitt (1) angelenkt sind.

9. Verstellbare Düse nach einem der Ansprüche 4 bis 8, **dadurch gekennzeichnet, daß** sie ferner divergierende Folgeklappen und konvergierende Folgeklappen umfaßt, die jeweils zwischen die gesteuerten divergierenden Klappen und die gesteuerten konvergierenden Klappen zwischengeschaltet sind.

10. Verstellbare Düse nach einem der Ansprüche 1 bis 9, **dadurch gekennzeichnet, daß** der elastische Ring aus einem laminierten Material hergestellt ist, das aus einer Aufschichtung von Schichten besteht, die abwechselnd aus einem Elastomer und aus einem Material bestehen, das aus einem Metall, einem organischen Verbundmaterial und einem thermostrukturellen Material ausgewählt wird.

## Claims

1. A steerable nozzle for a reaction engine, the nozzle comprising a fixed portion (1) for attaching to the engine, a mobile portion (21) mounted on one end (11) of the fixed portion, and means (3, 4, 22, 31) for steering the mobile portion that comprises a resilient annular portion (3) having a fixed circumference secured to said end (11) of the fixed portion and a mobile circumference connected to the mobile portion, and first control actuators (4) enabling the mobile portion with deformation of the resilient annular structure to be moved,
in which steerable nozzle the mobile portion is formed by a plurality of steerable flaps (21), and the resilient annular structure is formed by a resilient ring (3) having a fixed inner circumference formed by a first rigid annular ring (30) secured to the fixed portion (1) and a mobile outer circumference formed by a second rigid annular ring (31) to which the free ends of the first control actuators (4) are attached as well as the panels or connecting rods (22) on which the flaps (21) are hinged.

2. A steerable nozzle according to claim 1, **characterised in that** the flaps (21) are hinged at first respective locations (202) to said panels or connecting rods (22), and at second respective locations (201, 200) to the fixed portion (1).

3. A steerable nozzle according to claim 1 or 2, **characterised in that** said flaps are controlled diverging flaps (21).

4. A steerable nozzle according to claim 3, **characterised in that**
the nozzle also has controlled converging flaps (20);
each controlled diverging flap (21) is hinged at a first location (202) to a panel or a connecting rod (22), and at a second location (201) to a controlled converging flap (20); and
the controlled converging flaps (20) are also hinged to the fixed portion (1).

5. A steerable nozzle according to claim 4, **characterised in that** it further comprises means (5, 6, 7, 8) for steering the controlled converging flaps.

6. A steerable nozzle according to claim 5, **characterised in that** said means for steering the controlled converging flaps comprise second actuators (5) disposed on the circumference (16) of the fixed portion (1), a ring (6) substantially perpendicular to a longitudinal axis (AL) of the nozzle and having the free ends of the second actuators connected thereto, and wheels (7) mounted in said ring (6) and each following a cam surface (8) on a respective controlled converging flap (20).

7. A steerable nozzle according to claim 6, **characterised in that** it further comprises antirotation means (5, 51, 52) for limiting the rotary movements of said ring (6) about the longitudinal axis (AL) of the nozzle.

8. A steerable nozzle according to claim 7, **characterised in that** the antirotation means comprise said second actuators (5) which are fitted with side links (51) each hinged at a first end (510) to the cylinder of the corresponding actuator, and at a second end to the fixed portion (1).

9. A steerable nozzle according to any one of claims 4 to 8, **characterised in that** it further comprises following diverging flaps and following converging flaps which are interposed respectively between the controlled diverging flaps and between the controlled converging flaps.

10. A steerable nozzle according to any one of claims 1 to 9, **characterised in that** the resilient ring is made of a laminated material constituted by a stack of alternating layers of elastomer and of a material chosen among a metal, an organic composite material and a thermostructural material.
